# EUROPÄISCHE PATENTSCHRIFT

(11) **EP 2 072 171 B1**
(45) Veröffentlichungstag und Bekanntmachung des Hinweises auf die Patenterteilung: **27.02.2013**
(21) Anmeldenummer: 08021856.3
(22) Anmeldetag: 17.12.2008
(51) Int. Cl.: B23K 11/31

(54) **Vorrichtung zur Bearbeitung von Werkstücken**
Device for processing workpieces
Dispositif destiné au traitement de pièces

(30) Priorität: 20.12.2007 DE 102007061750
(43) Veröffentlichungstag der Anmeldung: 24.06.2009
(73) Patentinhaber: Robert Bosch GmbH, 70469 Stuttgart (DE)
(72) Erfinder: Doertoluk, Ibrahim, 97589 Wiesthal-Krommenthal (DE); Schuh, Peter, 97816 Lohr am Main (DE); Hanauer, Emil, 97355 Abtswind (DE); Schnurr, Bernd, 97816 Lohr am Main (DE)
(74) Vertreter: Thürer, Andreas

(56) Entgegenhaltungen:
- FR-A- 2 822 743

## Beschreibung

Die Erfindung betrifft eine Vorrichtung zur Bearbeitung von Werkstücken sowie ein Verfahren zum Betrieb einer solchen Vorrichtung gemäß den unabhängigen Ansprüchen.

Die Vorrichtung dient zum mechanischen Fügen von zu verbindenden Fügeteilen und besteht in der Regel aus einer Rahmenkonstruktion mit zwei Auslegern, wobei an den Auslegern Fügewerkzeuge befestigt sind. Derartige Vorrichtungen werden beispielsweise im Maschinen- und Fahrzeugbau und in anderen Branchen eingesetzt. Die Bearbeitung der Fügeteile erfolgt in der Regel derart, dass diese mittels eines Niet-, Klebe-, Press- oder Clinschvorganges verbunden werden. Ein weiteres Anwendungsfeld der Vorrichtung ist die Schweißtechnik, insbesondere die Widerstandsschweißtechnik. Die erwähnten Fügewerkzeuge stellen in diesem speziellen Falle Schweißelektroden dar, welche an den Auslegern angeordnet sind, wobei die Ausleger beweglich angeordnet sind und relativ zueinander bewegt werden können. Zwischen den Werkzeugen wird im Rahmen der Bearbeitungsschritte in der Regel ein Blechpaket als Fügeteil eingeklemmt und durch Einbringung eines Schweißstromes zusammengefügt.

Für den Antrieb der Ausleger sind beispielsweise elektrische-Antriebe vorgesehen; welche die mittels einer Schwenkachse gelagerten Ausleger in Bewegung versetzen können. Die Offenlegungsschrift DE 103 44 056 B4 beispielsweise zeigt eine Schweißzange mit fixierter Ausgleichsvorrichtung. Die Schweißzange umfasst zwei Schweißzangenschenkel mit jeweils einer Elektrode, welche derart mittels eines Exzenters gekoppelt sind, dass jeder Schweißzangenschenkel eine Bewegung ausführen kann. Weiter sind umfasst Mittel zum Antrieb des Exzenters, wobei das Exenterelement beim Erreichen mindestens eines vorbestimmten Drehwinkels die Schweißzangenschenkel zum Schweißen justiert oder der Exzenter beim Erreichen mindestens eines weiteren vorbestimmten Drehwinkels die Schweißzangenschenkel zum Verfahren der Schweißzangen fixiert. Die Schweißzange ist gedacht zur Verwendung an einem Roboterarm, wobei kein zusätzlicher Ausgleichsantrieb zur Realisierung einer Anstellbewegung an ein zu schweißendes Blech erforderlich ist.

Die Patentschrift DE 102 850 062 B4 zeigt eine Schweißzange zum Elektropunktschweißen sowie ein Verfahren zum Steuern des Elektrodenausgleichhubs. Schweißzangen werden üblicherweise zunächst mit einer relativ großen Elektrodenöffnungsweite in Richtung eines zu verschweißenden Werkstückes bewegt. Anschließend wird ein noch bestehender Abstand der Gegenelektrode vom Werkstück reduziert, indem die Gegenelektrode mittels eines Ausgleichsantriebs bis zum Anlagekontakt am Werkstück gebracht wird. Diese Bewegung wird als Ausgleichshub bezeichnet. Die hier gezeigte Erfindung arbeitet mit einem Bewegungssensor, der den Ausgleichshub als wegabhängiges Signal erfasst und einer Steuerung zuführt und bei erkanntem Stillstand der Elektrode den Ausgleichsantrieb abschaltet.

In der französischen Offenlegungsschrift 2822743 sind ebenfalls zahlreiche Beispiele für die Realisierung von Schweißzangen bzw. Vorrichtungen zur Bearbeitung von Werkstücken gezeigt. In Figur 4 beispielsweise ist gezeigt, wie der Ausgleichsantrieb mittels eines Motors und einer Kurbel realisiert ist. Eine Drehung des Rotors bewirkt hierbei die Drehung der Anordnung um ein zentrales Schwenklager.

Befindet sich nun zwischen den Schweißelektroden ein Werkstück und soll die Anordnung des Ausgleichsantriebes an das Werkstück angefahren werden, so ist es erforderlich den Ausgleichsantrieb anzusteuern und den Bewegungsvorgang zu überwachen. Ist das Werkstück beispielsweise zu weit von den Elektroden entfernt, so führt dies dazu, dass eine volle Drehung des Ausgleichsantriebes nicht ausreicht, um eine Elektrode an das Werkstück anzustellen. Der Motor würde in diesem Falle quasi endlos drehen, da die Steuerung eine Anstellung an das Werkstück nicht realisieren kann. Während einer vollen Umdrehung des Motors vollzieht die Elektrode eine Auf/Ab- Bewegung. Dies bedeutet, dass man bei Ansteuerung des Ausgleichantriebs mit positivem Moment die Elektrode sowohl vorwärts, als auch rückwärts bewegen kann. Zur Realisierung einer definierten Bewegung sind daher Zusatzsensoren für den Ansteuervorgang erforderlich, welche die gegenwärtige Bewegungsrichtung der Elektroden erfassen, um diese an die Steuerung zu übermitteln. Die Steuerung kann dann aus dem Moment des Antriebes und der erfassten Bewegungsrichtung Rückschlüsse auf die momentane Lage der Vorrichtung relativ zum Werkstück stellen.

Derartige Konstruktionen sind jedoch wegen der erforderlichen Sensorik und steuerseitigen Softwareanforderungen fehleranfälliger, weil gerade beim Betrieb von robotergefiihrten Schweißzangen hohe Beschleunigungen und Kräfte auf die Sensorik einwirken, welche zu Ungenauigkeiten oder Beschädigungen führen können.

Es ist die Aufgabe der Erfindung eine Vorrichtung zur Bearbeitung von Werkstücken sowie ein Verfahren zum Betrieb einer solchen Vorrichtung zur Verfügung zu stellen, wobei eine robuste und zuverlässige Realisierung einer Ausgleichsbewegung preiswert realisierbar sein soll.

Die Erfindung löst diese Aufgabe, indem sie eine Vorrichtung nach Anspruch 1 zur Verfügung stellt.

Im Gegensatz zu den aus dem Stand der Technik bekannten Kurbelantriebslösungen ohne Wegbegrenzung kann es bei dieser Lösung nicht vorkommen, dass bei der Anstellbewegung zum Werkstück der obere Totpunkt der Kurbel überschritten wird, was die zuvor erwähnte Endlosbewegung zur Folge haben würde. Dies kann im Betrieb immer beispielsweise dann vorkommen, wenn das Blech oberhalb der maximal erreichbaren Position der Kurbel liegt. Der Motorwinkel wird mittels der erfindungsgemäßen Lösung derart begrenzt, dass die Vorrichtung bei einem Moment mit definiertem Vorzeichen entweder in eine erste Richtung oder in eine der ersten Richtung entgegen gesetzte zweite Richtung bewegt werden kann. Die Bewegung der Vorrichtung ist ausschließlich innerhalb der Wegbegrenzung möglich. Die Bewegungsrichtung und das Ansteuermoment sind damit eindeutig einander zuordenbar, so dass sich die Komplexität der Vorrichtung und die Komplexität bei der Ansteuerung reduziert. Einem positiven Ansteuermoment (z.B. Ansteuerstrom positiv) kann somit beispielsweise eindeutig eine Aufwärtsbewegung zugeordnet werden und einem negativen Ansteuermoment (z.B. Ansteuerstrom positiv) kann somit beispielsweise eindeutig eine Abwärtsbewegung zugeordnet werden.

Der zuvor geschilderte Fall, dass bei einem positiven Moment sowohl eine Aufwärts- als auch eine Abwärtsbewegung auftreten kann, oder dass bei einem negativen Moment sowohl eine Abwärts- als auch eine Aufwärtsbewegung auftreten kann, wird hierdurch ausgeschlossen. Zusätzliche Sensorik und Software zur Erkennung der Bewegungsrichtung entfällt. Die Bewegungsrichtung ist bereits aufgrund des bekannten Ansteuermomentes definiert. Die geringere Komplexität und die fehlende Sensorik machen die Gesamtanordnung robuster und preiswerter.

Die Vorrichtung wird derart betrieben, dass zunächst in einem ersten Schritt eine Annäherung des ersten Bearbeitungselementes mittels des ersten Antriebes zum Beispiel an ein Werkstück erfolgt. Die Annäherung des zweiten Bearbeitungselementes an das Werkstück mittels des zweiten Antriebs erfolgt vorzugsweise dann, wenn das erste Bearbeitungselement am Werkstück anliegt. Sofern das erste Bearbeitungselement an einem Wegbegrenzungsmittel zum Anliegen kommt, oder nach Abschluss eines Bearbeitungsvorganges, welcher mittels beider Verbindungsmittel durchgeführt wurde, erfolgt das entfernen des ersten Bearbeitungsmittel mittels des ersten Antriebs vom Werkstück. Zur Realisierung dieses Verfahrens ist eine zusätzliche Einrichtung, insbesondere eine SPS-Steuerung vorgesehen.

Zumindest ein Antrieb wird dabei mittels Momentenregelung betrieben. Unter Momentenregelung wird im Sprachgebrauch der Antriebstechnik die Regelung des Motorstromes verstanden. Es besteht im Allgemeinen ein konstanter Zusammenhang zwischen dem Motorstrom und den Motordrehmoment (die Drehmomentkraftkonstante wird im Motordatenblatt angegeben), so dass die Regelung des Motorstromes zu einer hinreichend genauen Regelung des Motordrehmomentes ausgenutzt wird. Der Vorteil liegt in der Regelung des Momentes mittels des Motorstromes. Zur Regelung des Stromes bzw. die winkelabhängige Bestromung der Motorwicklungen (Kommutierung), ist der Stromistwert und die aktuelle Rotorposition maßgeblich. Für die Erfassung der Rotorposition ist ein preiswerter Motorgeber mit geringen Genauigkeitsanforderungen wie z.B. ein Resolver ausreichend. Der Resolver hat zu dem den Vorteil , dass er flacher baut als ein Geber für hohe Genauigkeitsanforderungen wie z.B. ein optischer Inkrementalgeber. Der frei werdende Bauraum kann dadurch für eine Motorbremse ausgenutzt werden. Ein weiterer Vorteil der Momentenregelung resultiert aus der Tatsache, dass sie bei der Schweißzangenapplikation im Vergleich zur Lageregelung bessere Ergebnisse liefert. Die Lageregelung erfordert bei schwingungsfähigen und spielbehaftetem Systemen, wie sie bei der Schweißzange vorliegen, einen lastseitigen Geber, damit die Steuerung bezüglich der tatsächlichen Bewegungen der Last informiert ist. Wird nur mit dem Motor gearbeitet, ist eine schwingungsfreie Positionierung nicht möglich. Der Antriebslieferant hat in der Regel keine Möglichkeit an der Zange einen lastseitigen Geber anzubringen und damit müsste die schwingungsbehaftete Positionierung in Kauf genommen werden. Bei der Momentenregelung kann in Analogie zur pneumatischen Druckregelung die Stellgröße (der Motorstrom) konstant angestellt und die Zange auf den Anschlag (Blech) positioniert werden.

Zumindest ein Antrieb umfasst einen Signalgeber, wobei die vom Geber gelieferten Daten zur Ermittlung der Bewegung zumindest eines Verbindungsmittels verarbeitet werden. Es können optional per Software Lagegrenzwerte zusätzlich überwacht werden. Alternativ kann der Lageistwert für den Antrieb unter Berücksichtigung des Betriebsstromes und/oder der Betriebsspannung ermittelt wird, wodurch man auf eine Lageerfassung vollständig verzichten und Kosten einsparen kann.

Erfindungsgemäß wird ein Getriebe zwischen dem ersten Antrieb und dem ersten Ausleger vorgesehen, welches das Wegbegrenzungsmittel für das erste Bearbeitungsmittel umfasst. Diese Lösungsvariante führt zu einer sehr kompakten Bauweise. Trennt man Getriebe und Wegbegrenzungsmittel, so können beide Komponenten unabhängig voneinander Montiert werden, wobei eine Wegbegrenzung nachrüstbar ist.

Erfindungsgemäß wird das Getriebe mittels einer Kurbel und eines Kraftübertragungsmittels realisiert, welches mit der Kurbel verbunden ist, wobei zumindest ein Wegbegrenzungsmittel an der Kurbel und/oder am Kraftübertragungsmittel vorgesehen ist, um die Bewegungsfreiheit der Kurbel oder des Kraftübertragungsmittels zu begrenzen. Je nach Anwendungsfall und Vorrichtungsabmessungen kann somit ein speziell für den Anwendungsfall maßgeschneidertes Getriebe verwendet werden. Bevorzugt bildet jedoch das Wegbegrenzungsmittel einen integralen Bestandteil des Getriebes, so dass keine weiteren Wegbegrenzungsmaßnahmen an der Vorrichtung selbst erforderlich werden.

Dies trägt zu einer kompakten und modularen Bauweise der Vorrichtung bei. Bei dieser Lösung können beispielsweise auch zwei Wegbegrenzungsmittel an den Totpunkten der Kurbel vorgesehen werden, um das Kraftübertragungsmittel oder die Kurbel in der Bewegungsfreiheit zu begrenzen. Dies bedeutet, dass das Kraftübertragungsmittel in einer ersten Richtung von seinem Nullpunkt bis maximal zum Totpunkt bewegt werden kann. Gleiches gilt für die der ersten Bewegungsrichtungen entgegen gesetzte Bewegungsrichtung. Durch das Wegbegrenzungsmittel kann somit das Kraftübertragungsmittel zwischen den beiden zuvor genannten Totpunkten bewegt werden, wobei der ersten Bewegung ein erstes Drehmoment und der zweiten Bewegung ein zweites Drehmoment fest zuordenbar ist. Hierdurch kann beispielsweise im Rahmen der Ansteuerung dem Drehmoment eine eindeutige Bewegungsrichtung zugeordnet werden. Spezielle Sensorik zur Erkennung der Bewegungsrichtung wird überflüssig.

Erfindungsgemäß handelt es sich bei dem Kraftübertragungsmittel um ein Gestänge in Form einer Pleuelstange, welche zwischen zwei Anschlägen beweglich angeordnet ist. In Verbindung mit einer Kurbel kann die Pleuelstange zur Realisierung einer Aufwärts- und/oder Abwärtsbewegung eines Bearbeitungselementes verwendet werden. Diese Art der Realisierung ist besonders einfach, wenig wartungsanfällig und preiswert.

Ein Wegbegrenzungsmittel ist derart angeordnet, das bei einem ersten Antriebsmoment für den ersten Antrieb mit ersten Vorzeichen eine erste Bewegung der Vorrichtung und bei einem zweiten Antriebsmoment für den ersten Antrieb mit dem zweiten Vorzeichen eine der ersten Bewegung der Vorrichtung entgegen gesetzte Bewegung der Vorrichtung bewirkt wird, oder wobei bei dem ersten Antriebsmoment für den-ersten Antrieb-mit ersten Vorzeichen eine der ersten Bewegung der Vorrichtung entgegen gesetzt Bewegung der Vorrichtung bewirkt wird und bei dem zweiten Antriebsmoment für den ersten Antrieb mit zweitem Vorzeichen eine der ersten Bewegung der Vorrichtung entsprechende Bewegung der Vorrichtung bewirkt wird. Der hieraus resultierende Vorteil liegt darin, dass die Bewegungsrichtung des Antriebsmomentes einer mechanischen Bewegung direkt zuordenbar ist.

Vorzugsweise sind die Antriebe mittels Servomotoren realisiert, wobei die Servomotoren ein Signalerzeugungsmittel, insbesondere zur Kommutierung und/oder zur Drehzahlmessung umfassen. Die Servomotoren ermöglichen eine geregelte Bewegungsausführung, was bei Anwendungen, beispielsweise im Kfz-Bereich, unverzichtbar ist.

Alternativ könnte zumindest ein Antrieb mittels eines geberlosen Servomotors realisiert sein, wobei eine Einrichtung vorgesehen ist, welche die Rotorposition unter Berücksichtigung der Beziehung der Motor-EMK (Elektromagnetische Kraft) und/oder der Ausrichtung zwischen Stator und Permanentmagneten des Rotors ermittelt, beispielsweise unter Verarbeitung des Ansteuerstromes und der Ansteuerspannung. Bei dieser Lösung könnte weitere Sensorik eingespart werden, insbesondere Sensorik zur Ermittlung des Rotorlagewinkels. Es könnte der Rotorwinkel auch rein rechnerisch ermittelt werden, beispielsweise unter Berücksichtigung der von der Rotorlage abhängigen magnetischen Flussdichte im Motor. Auch wäre die Rotorlage unter Berücksichtigung der am Motor anliegenden Spannung bzw. des dem Motor zugeführten Stromes ermittelbar.

Die Ansteuerung der Antriebe der Vorrichtung erfolgt mittels einer Steuereinrichtung, welche für die Betriebsart Momentenregelung mit Zeitsteuerung geeignet ist. Der Momentensollwert wird für eine vorher definierte Zeitspanne der Steuerung vorgegeben. Die Zeitspanne kann so dimensioniert werden, dass der größtmögliche Elektrodenweg gefahren werden kann. Die Ermittlung der Zeitspanne erfolgt mittels eines Kalibriervorganges.

Je nachdem welche Bewegung die vom Bearbeitungselement umfasste Elektrode ausführen soll, wird mit positiven oder negativen Moment gearbeitet. Sollte das Werkstück fehlen oder die Vorrichtung zu weit vom Werkstück entfernt sein, so beschränkt die erfindungsgemäße Lösung den Bewegungsvorgang mechanisch. Die Steuerung erkennt anhand der Anschläge beziehungsweise der fehlenden Bewegung, dass die oberen Totpunkte erreicht wurden, ohne das eine Anstellbewegung realisiert werden konnte. Mittels-der mechanischen Begrenzung kann der Motor nur eine Bewegung vollziehen, die kleiner als 360° ist. Die Position der mechanischen Anschläge ist bekannt (z.B. 0° und 170°). Das Blech befindet sich normalerweise zwischen den mechanischen Anschlägen (z.B. bei 140°). Erreicht der Motor nach Ablauf der eingestellten Zeit den Anschlag, erkennt das System, dass innerhalb des Elektrodenweges kein Blech vorhanden war, sonst wäre der Lageistwert kleiner als die Position des mechanischen Anschlages gewesen. In diesem Falle ist es dann möglich, einen entsprechenden Warnhinweis an den Bediener der Vorrichtung oder eine übergeordnete Systemsteuerung auszugeben, so dass Gegenmaßnahmen ergriffen werden können.

Die erfindungsgemäße Vorrichtung ist auch geeignet zum Betrieb in Verbindung mit Robotern, beispielsweise Schweißrobotern. Es wäre in diesem Falle möglich die Vorrichtung unter Verwendung der Robotersteuerung anzutreiben. Auch hydraulische und/oder pneumatische Antriebe könnten beispielsweise im Mischbetrieb mit Elektromotoren zum Einsatz kommen.

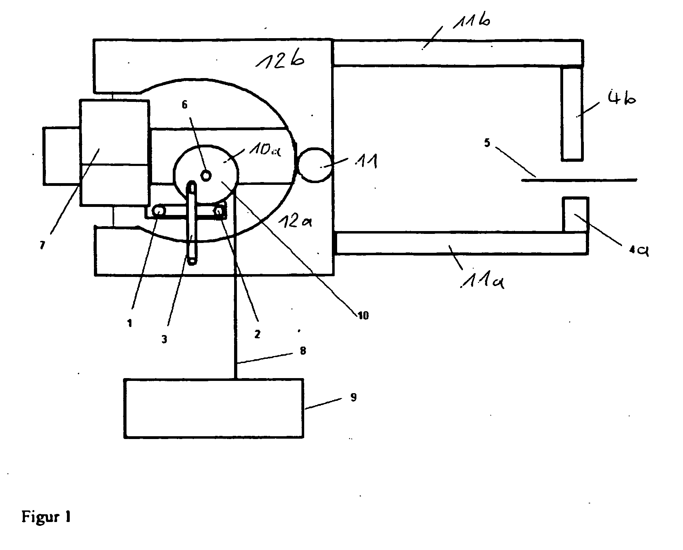

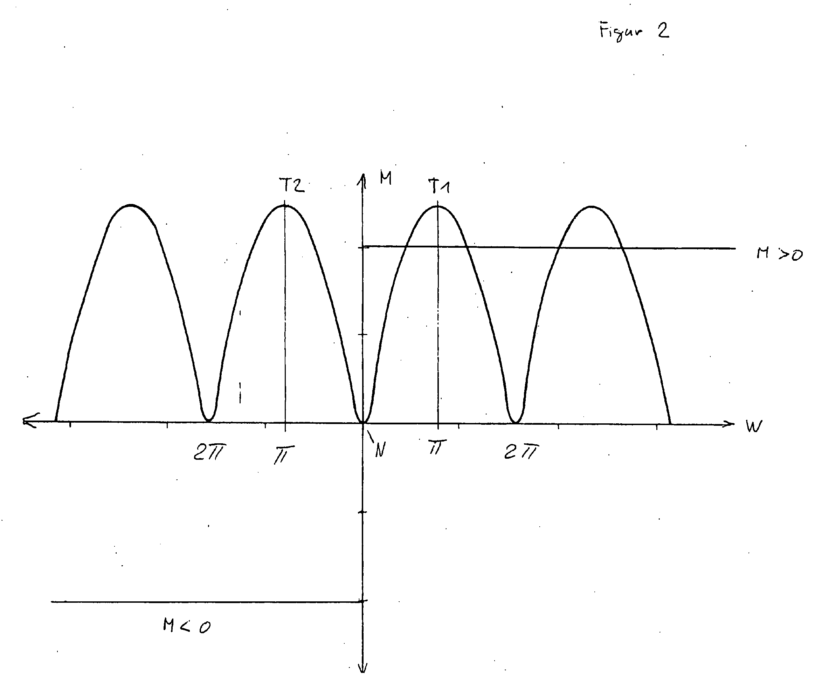

In folgendem werden nun anhand der Figuren 1 und 2 grobschematisch die wesentlichen Aspekte der Erfindung gezeigt:
Figur 1 zeigt eine Seitenansicht der erfindungsgemäßen Vorrichtung.
Figur 2 zeigt den Bewegungshub der Elektroden.

In Figur 1 ist eine Schweißzange dargestellt. Die Schweißzange umfasst folgende Bestandteile: eine erste Schweißelektrode 4B und eine zweite Schweißelektrode 4A. Zwischen den beiden Elektroden 4A und 4B ist ein Werkstück 5 angedeutet. Dieses Werkstück 5 könnte beispielsweise durch zwei miteinander zu verbindende Bleche 5 repräsentiert sein. Die erste Elektrode 4B ist an einem ersten Ausleger 11B befestigt, die zweite Elektrode 4A ist an einem zweiten Ausleger 11 A befestigt. Die Ausleger 11A bzw. 11 B sind am Chassis 12A, 12B der Vorrichtung fest montiert. Das Chassis 12A, 12B umfasst einen zentralen Drehpunkt 11 und ist zweiteilig ausgebildet. Um diesen zentralen Drehpunkt 11 kann das erste Chassisteil 12A zusammen mit dem Ausleger 11A und der Schweißelektrode 4A um den Drehpunkt bewegt werden. Gleiches gilt für das zweite Teil des Chassis 12B, welches zusammen mit dem Ausleger 11B und der Elektrode 4B ebenfalls um denselben Drehpunkt 11 beweglich angeordnet ist. Für die Relativbewegung zwischen beiden Chassisteilen 12A und 12B ist ein Haupthubzylinder 7 verantwortlich. Dieser Haupthubzylinder 7 ist zwischen beiden Chassisteilen 12A und 12B angeordnet und bewirkt die um den Drehpunkt 11 gewünschte Relativbewegung beider Ausleger 12A, 12B und Elektroden 4A, 4B. Je weiter der Haupthub 7 eine lineare Auslenkung erfährt, desto näher werden die Elektroden 4A, 4B mittels der Ausleger 11A und 11B zueinander geführt, so dass letztlich das Werkstück 5 zwischen beiden Elektroden 4A, 4B eingeklemmt wird. Ein zusammenziehen des Haupthubzylinders 7 bewirkt das auseinanderfahren beider Elektroden 4A und 4B, so dass sich diese wiederum vom Werkstück 5 lösen. Sofern der Haupthubzylinder 7 fixiert wird, bewirkt dies auch eine Fixierung des Abstandes beider Elektroden 4A und 4B. In diesem Falle ist es jedoch möglich die Gesamtanordnung, bestehend aus den Chassisteilen 12A und 12B, den Auslegern 11A und 11B und den Elektroden 4A und 4B um die zentrale Drehachse 11 zu bewegen und den Elektrodenabstand beizubehalten. Für diese Bewegung der Gesamtanordnung um die zentrale Drehachse 11 ist der sogenannte Ausgleichsantrieb 10 bestehend aus Achse 6, Scheibe 10A und Pleuel 3 verantwortlich. Mittels des Ausgleichsantriebes 10 ist es möglich beispielsweise zunächst die Elektrode 4A an das Werkstück 5 anzunähern. Umgekehrt könnte auch zunächst die Elektrode 4B an das Werkstück 5 angenähert werden. Wenn zumindest eine Elektrode 4A oder 4B am Werkstück anliegt, wird mittels des Haupthubzylinders 7 eine Zusammenführung beider Elektroden 4A,B für den Schweißvorgang herbeigeführt. An der Motorwelle 6 (Ausgleichsmotorwelle) ist ein Kurbelgetriebe mittels einer drehbaren Scheibe 10 A und einem Pleuel 3 realisiert. Dreht sich die Scheibe 10 A um die Motorachse 6, bewirkt das am äußeren Umfang der Scheibe angeordnete Pleuel 3, welches mit einem ersten Chassisteil 12A, 12B verbunden ist, eine Bewegung der gesamten Anordnung um die zentrale Drehachse 11. Die Bewegung des Pleuels 3 wird begrenzt durch das erfindungsgemäße Wegbegrenzungsmittel 1, 2 in Form eines ersten und eines zweiten Anschlages für das Pleuel 3. Der Anschlag ist so konzipiert, dass die Scheibe niemals eine volle 360 Grad Drehung vollziehen kann. Beispielsweise könnten die Wegbegrenzungsmittel 12 derart angeordnet sein, dass die Drehung der Scheibe in eine Richtung auf einen Bereich zwischen Null und annähernd 180 Grad oder zwischen Null und annähernd 90 Grad begrenzt wird. Obgleich hier die Wegbegrenzungsmittel 1,2 zur Begrenzung der Pleuelbewegung seitlich des Pleuels 3 gezeigt sind, könnten diese auch an der Scheibe 10 angeordnet sein. Vorteil dieser Lösung wäre, dass die Scheibendrehung unmittelbar und nicht mittelbar begrenzt wird. Die Ansteuerung des Ausgleichsmotors erfolgt mittels einer Steuerung 9 bzw. eines Antriebsregelverstärkers 9 mit integrierter Steuerung 9. Ausgteichsmotor 10A und Steuerung 9 sind mittels einer Geber- und/oder Versorgungsleitung 8 verbunden. Die Versorgungsleitung 8 dient zur Versorgung des Ausgleichsantriebes 10 mit elektrischer Leistung, die Geberleitung dient zur Kommunikation des Ausgleichsantriebes 10 mit der Steuerung 9, insbesondere zur Übermittlung von motorspezifischen Kenndaten wie beispielsweise der Drehzahl. Auch kombinierte Versorgungs- und Signalleitungen 8 sind denkbar. Wird die bereits zuvor erwähnte geberlose Servomotorlösung verwendet, so wird die Lage des Rotors mittels der Steuerung 9 rechnerisch aus den Betriebsdaten des Motors 10 ermittelt.

In Figur 2 ist ein Diagramm gezeigt, welches prinzipiell den Effekt der erfindungsgemäßen Vorrichtung auf den Elektrodenweg aufzeigt. An der Abszisse ist der Motorwinkel "w" abgetragen, an der Ordinate ist das Motormoment "M" aufgetragen. Das Diagramm umfasst vier Quadranten, wobei der erste Quadrant für ein positives Motormoment (M > 0) und der dritte Quadrant für ein negatives Motormoment (M < 0) steht. Beim positiven Motormoment (Quadrant rechts oben) ist deutlich zu sehen, dass vom Nullpunkt des Motorwinkels aus betrachtet, der Elektrodenweg zunächst in positiver Richtung ansteigt um bei unverändertem Motormoment am ersten Totpunkt T1 eine Richtungsumkehr in Entgegengesetzter Richtung vorzunehmen (Aufwärtsbewegung und Abwärtsbewegung der Elektroden).Bleibt das . Motormoment unverändert (M > 0), so verläuft der Elektrodenweg gemäß der Kurve aufwärts und abwärts. In der Praxis bedeutet dies, dass nach Überschreiten des oberen Totpunktes T1 die Elektrode, welche zuvor beispielsweise dem Werkstück 5 angenähert wurde, nun vom Werkstück entfernt wird. Nach einer vollständigen Umdrehung der Kurbelwelle (2 PI) wiederholt sich der Vorgang im Prinzip endlos, solange das Motormoment unverändert positiv bleibt.

Bei negativen Motormoment (siehe Quadrant links unten und links oben) gilt das zuvor gesagte ebenfalls, jedoch in entgegen gesetzter Richtung. Das heißt bei negativem Motormoment (M < 0) folgt in diesem konkreten Beispiel zunächst ein Elektrodenweg in positiver Richtung um dann ebenfalls bei dem zweiten Totpunkt T2 einen Richtungswechsel vorzunehmen. Auch hier würde ohne Beachtung des oberen Totpunktes T2 im Prinzip eine endlose Aufwärtsbewegung und Abwärtsbewegung der Elektroden resultieren.

Die Erfindung bewirkt, dass bei positivem Motormoment (M> 0) der Elektrodenweg begrenzt wird. Diese Begrenzung ist in Form einer senkrechten Linien, welche durch den Totpunkt T1 verläuft verdeutlicht. Bei negativen Motormoment kommt die Begrenzung am Totpunkt T2 zum Tragen. Die Totpunkte T1/T2 werden mittels der erfindungsgemäßen Wegbegrenzungsmittel 1 und 2 mechanisch realisiert.

Im folgenden wird nun nochmals kurz beschrieben, wie die erfindungsgemäße Vorrichtung arbeitet. Die folgende Beschreibung erfolgt unter der Annahme, dass der Schwerpunkt der Schweißzange derart bemessen ist, dass die Schweißzange bei stromlosem Ausgleichsmotor 10 den Pleuel (Bild 1, Bezugszeichen 3) an den Anschlag 1 andrückt. Zunächst wird der Ausgleichsmotor 10 von der Steuerung 9 mittels eines ersten (Positiven oder negativen) Momentes beaufschlagt. Dies bewirkt, dass die Elektrode 4A an das Werkstück 5 herangeführt wird. Falls kein Werkstück 5 vorhanden sein sollte, bleibt die Elektrode 4A an einem Totpunkt T1/2 stehen, welcher mittels eines Anschlages 1/2 definiert ist. Befindet sich ein Blech 5 innerhalb eines Elektrodenweges zwischen dem Nullpunkt N (Figur 2) und einem der Totpunkte T1 oder T2, so kann die Referenzelektrode an das Blech angedrückt werden. Befindet sich kein Blech 5 innerhalb eines Elektrodenweges zwischen dem Nullpunkt N und einem der Totpunkte T1 oder T2, so wird der Elektrodenweg automatisch auf den Weg bis zu einem der Totpunkte T 1 oder T2 begrenzt.

Bleibt die Elektrode zwischen beiden Endpositionen (Anschlag 1 oder 2) stehen, so kann davon ausgegangen werden, dass sie an ein Blech angestoßen ist. Ist dies nicht der Fall, so kann davon ausgegangen werden, dass kein Blech vorhanden ist. Wurde ein vorhandenes Blech erkannt, so wird mittels des Haupthubzylinders 7 ein Krafthub durchgeführt, das heißt der Hauptzylinder 7 wird aufgefahren, was wiederum das zusammenführen der Elektroden 4A, 4B bewirkt, so dass das Werkstück 5 zwischen beiden Elektroden eingeklemmt ist und ein Schweißpunkt gesetzt werden kann. Anschließend wird der Hauptzylinder zugefahren, was das lösen vom Werkstück 5 bewirkt und die Elektrode 4A wird mittels eines negativen Momentes wieder vom Werkstück entfernt, so dass die Schweißzange beispielsweise mittels eines Roboters in ihrer Position verändert werden kann.

## Patentansprüche

1. Vorrichtung zur Bearbeitung von Werkstücken (5) mit einem ersten Bearbeitungselement (4a) und einem mit dem ersten Bearbeitungselement (4a) zusammenwirkenden zweiten Bearbeitungselement (4b), mit Schwenkachse (11), um welche die Bearbeitungselemente (4a,b) mittels eines ersten und zweiten Auslegers (11a,b) schwenkbar gelagert sind, mit erstem Antrieb (10) zur Bewegung der Vorrichtung um die Schwenkachse (11) und mit zweitem Antrieb (7) zur Ausführung einer relativen Bewegung zwischen beiden Auslegern (11a,b) um die Schwenkachse (11), wobei ein Wegbegrenzungsmittel (1,2) vorgesehen ist, mittels dessen das Ausmaß der Schwenkbewegung der Vorrichtung um die Schwenkachse (11)
beeinflussbar ist, wobei ein Getriebe (3,6) zwischen erstem Antrieb (10) und erstem Ausleger (11a) vorgesehen ist, welches das Wegbegrenzungsmittel (1,2) umfasst,
**dadurch gekennzeichnet, dass**
das Getriebe (3,6) mittels einer Kurbel (10a) und eines Kraftübertragungsmittels (3) realisiert ist, welches mit der Kurbel (10a) verbunden ist; wobei das Wegbegrenzungsmittel in Form zweier Anschläge ausgebildet ist; wobei das Kraftübertragungsmittel (3) ein Gestänge in Form einer Pleuelstange ist, welche zwischen den zwei Anschlägen beweglich angeordnet (3) ist.

2. Vorrichtung nach Anspruch 1, wobei das Wegbegrenzungsmittel (1,2) an der Kurbel (10a) angeordnet ist.

3. Vorrichtung nach einem der vorhergehenden Ansprüche, wobei das Wegbegrenzungsmittel (1,2) derart angeordnet ist, dass bei einem ersten Antriebsmoment mit erstem Vorzeichen für den ersten Antrieb (10) eine erste Bewegung der Vorrichtung und bei einem zweiten Antriebsmoment mit zweitem Vorzeichen für den ersten Antrieb (10) eine der ersten Bewegung der Vorrichtung entgegen gesetzte Bewegung der Vorrichtung bewirkt wird oder wobei bei dem erstem Antriebsmoment mit erstem Vorzeichen für den ersten Antrieb (10) eine der ersten Bewegung der Vorrichtung entgegen gesetzte Bewegung der Vorrichtung bewirkt wird und bei dem zweiten Antriebsmoment mit zweitem Vorzeichen für den ersten Antrieb (10), eine der ersten Bewegung der Vorrichtung entsprechende Bewegung der Vorrichtung bewirkt wird.

4. Vorrichtung nach einem der vorhergehenden Ansprüche, wobei zumindest ein Antrieb (7,10) mittels eines Servomotors (7,10) realisiert ist, wobei der Servomotor ein Signalerzeugungsmittel zur Kommutierung umfasst.

5. Vorrichtung nach einem der vorhergehenden Ansprüche 1 bis 4, wobei zumindest ein Antrieb (7,10) mittels eines geberlosen Servomotors realisiert ist, wobei eine Einrichtung (9) vorgesehen ist, welche die Rotorposition unter Berücksichtigung des Motorbetriebsstromes und/oder der Motorbetriebsspannung ermittelt.

6. Vorrichtung nach einem der vorhergehenden Ansprüche, wobei zumindest ein Antrieb (7,10) pneumatisch oder hydraulisch realisiert ist.

7. Verfahren zum Betrieb einer Vorrichtung nach anspruch 1

8. Verfahren nach Anspruch 7, wobei folgende Verfahrensschritte umfasst sind:
a) Bewegung des ersten Bearbeitungselementes (4a) mittels des ersten Antriebes (10) in eine erste Richtung;
b) Bewegung des zweiten Bearbeitungselementes (4b) mittels des zweiten Antriebs (7) in eine der ersten Richtung entgegen gesetzte Richtung;
c) Bewegung des ersten Bearbeitungsmittels (4a) in die der ersten Richtung entgegen gesetzte Richtung, sobald das erste Bearbeitungsmittel (4a) am Wegbegrenzungsmittel (1,2) anliegt oder
d) Bewegung des ersten Bearbeitungsmittels (4a) in die der ersten Richtung entgegen gesetzte Richtung, sobald ein mittels beider Bearbeitungsmittel (4a,b) durchgeführter Bearbeitungsvorgang abgeschlossen ist.

9. Verfahren nach Anspruch 7 oder 8, wobei zumindest ein Antrieb (7,10) mittels einer mittels einer Steuerung (9) durchgeführten Momentenregelung betrieben wird.

10. Verfahren nach Anspruch 7, 8 oder 9, wobei zumindest ein Antrieb (7,10) einen Drehzahlgeber und/oder einen Winkelgeber umfasst und wobei die vom Geber gelieferten Daten zur Ermittlung des Lageistwertes von der Steuerung (9) verarbeitet werden.

11. Verfahren nach Anspruch 7, 8 oder 9, wobei zumindest ein Antrieb (7,10) ohne Geber realisiert ist und der Lageistwert unter Berücksichtigung des Betriebsstromes und/oder der Betriebsspannung ermittelt wird.

## Claims

1. Device for processing workpieces (5) having a first processing element (4a) and a second processing element (4b) which interacts with the first processing element (4a), having a pivoting axis (11) about which the processing elements (4a, b) are pivotably mounted by means of a first and a second extension arm (11a, b), having a drive (10) for moving the device about the pivoting axis (11) and having a second drive (7) for carrying out a relative movement between the two extension arms (11a, b) about the pivoting axis (11), wherein a travel-limiting means (1, 2) is provided by means of which the extent of the pivoting movement of the device about the pivoting axis (11) can be influenced, wherein a gear mechanism (3, 6) is provided between the first drive (10) and the first extension arm (11a), which gear mechanism (3, 6) comprises the travel-limiting means (1, 2),
**characterized in that**
the gear mechanism (3, 6) is implemented by means of a crank (10a) and a force-transmission means (3) which is connected to the crank (10a); wherein the travel-limiting means is embodied in the form of two stops; wherein the force-transmission means (3) is a linkage in the form of a connecting rod which is arranged in a movable fashion between the two stops.

2. Device according to Claim 1, wherein the travel-limiting means (1, 2) is arranged on the crank (10a).

3. Device according to one of the preceding claims, wherein the travel-limiting means (1, 2) is arranged in such a way that in the case of a first driving torque with a first sign for the first drive (10) a first movement of the device is brought about, and in the case of a second driving torque with a second sign for the first drive (10) a movement of the device which is opposed to the first movement of the device is brought about, or wherein in the case of the first driving torque with a first sign for the first drive (10) a movement of the device which is opposed to the first movement of the device is brought about, and in the case of the second driving torque with a second sign for the first drive (10) a movement of the device which corresponds to the first movement of the device is brought about.

4. Device according to one of the preceding claims, wherein at least one drive (7, 10) is implemented by means of a servo motor (7, 10), wherein the servo motor comprises a signal-generating means for commutation.

5. Device according to one of the preceding Claims 1 to 4, wherein at least one drive (7, 10) is implemented by means of a servomotor without a signal generator, wherein a device (9) is provided which determines the rotor position by taking into account the motor operating current and/or the motor operating voltage.

6. Device according to one of the preceding claims, wherein at least one drive (7, 10) is implemented pneumatically or hydraulically.

7. Method for operating a device according to Claim 1.

8. Method according to Claim 7, comprising the following method steps:
a) movement of the first processing element (4a) in a first direction by means of the first drive (10);
b) movement of the second processing element (4b) in a direction opposing the first direction by means of the second drive (7);
c) movement of the first processing means (4a) in the direction opposing the first direction as soon as the first processing means (4a) bears against the travel-limiting means (1, 2), or
d) movement of the first processing means (4a) in the direction opposing the first direction as soon as a processing procedure which is carried out by means of both processing means (4a, b) is concluded.

9. Method according to Claim 7 or 8, wherein at least one drive (7, 10) is operated by means of a torque regulating process which is carried out by means of a controller (9).

10. Method according to Claim 7, 8 or 9, wherein at least one drive (7, 10) comprises a rotational speed signal generator and/or an angle signal generator, and wherein the data supplied by the signal generator are processed by the controller (9) in order to determine the actual position value.

11. Method according to Claim 7, 8 or 9, wherein at least one drive (7, 10) is implemented without a signal generator, and the actual position value is determined by taking into account the operating current and/or the operating voltage.

## Revendications

1. Ensemble de traitement de pièces (5), l'ensemble présentant un premier élément de traitement (4a) et un deuxième élément de traitement (4b) qui coopère avec le premier élément de traitement (4a), un axe de pivotement (11) autour duquel les éléments de traitement (4a, b) sont montés à pivotement au moyen d'un premier et d'un deuxième bras (11a, b), un premier entraînement (10) qui délace l'ensemble autour de l'axe de pivotement (11) et un deuxième entraînement (7) qui permet d'exécuter un déplacement relatif des deux bras (11a, b) autour de l'axe de pivotement (11), un moyen (1, 2) de restriction de course permettant d'agir sur l'amplitude du déplacement de pivotement de l'ensemble autour de l'axe de pivotement (11) étant prévu, une transmission (3, 6) qui présente le moyen (1, 2) de restriction de course étant prévue entre le premier entraînement (10) et le premier bras (11a),
**caractérisé en ce que**
la transmission (3, 6) est réalisée au moyen d'une manivelle (10a) et d'un moyen (3) de transmission de force relié à la manivelle (10a),
**en ce que** le moyen de restriction de course est configuré sous la forme de deux butées et
**en ce que** le moyen (3) de transmission de force est une tringle qui présente la forme d'une tige de bielle disposée à déplacement entre les deux butées.

2. Ensemble selon la revendication 1, dans lequel le moyen (1, 2) de restriction de course est disposé sur la manivelle (10a).

3. Ensemble selon l'une des revendications précédentes, dans lequel le moyen (1, 2) de restriction de course est disposé de telle sorte qu'à un premier couple d'entraînement d'un premier signe du premier entraînement (10), il a pour effet un premier déplacement de l'ensemble et qu'à un deuxième couple d'entraînement à un deuxième signe du premier entraînement (10), il a pour effet un déplacement de l'ensemble dans le sens opposé au premier déplacement de l'ensemble et de telle sorte qu'au premier couple d'entraînement du premier signe du premier entraînement (10), il a pour effet un déplacement de l'ensemble dans le sens opposé au premier déplacement et qu'au deuxième couple d'entraînement du deuxième signe du premier entraînement (10), il a pour effet un déplacement de l'ensemble qui correspond ay premier déplacement de l'ensemble.

4. Ensemble selon l'une des revendications précédentes, dans lequel au moins un entraînement (7, 10) est réalisé au moyen d'un servomoteur (7, 10), le servomoteur comprenant un moyen de formation de signaux de commutation.

5. Ensemble selon l'une des revendications 1 à 4 qui précèdent, dans lequel au moins un entraînement (7, 10) est réalisé au moyen d'un servomoteur sans détecteur, un dispositif (9) qui détermine la position du rotor en tenant compte du courant de fonctionnement du moteur et/ou de la tension de fonctionnement du moteur étant prévu.

6. Ensemble selon l'une des revendications précédentes, dans lequel au moins un entraînement (7, 10) est réalisé par des moyens pneumatiques ou hydrauliques.

7. Procédé d'utilisation d'un ensemble selon la revendication 1.

8. Procédé selon la revendication 7, comprenant les étapes suivantes :
a) déplacement dans une première direction du premier élément de traitement (4a) au moyen du premier entraînement (10),
b) déplacement dans une direction opposée à la première direction du deuxième élément de traitement (4b) au moyen du deuxième entraînement (7),
c) déplacement dans une direction opposée à la première direction du premier élément de traitement (4a) dès que le premier élément de traitement (4a) repose contre le moyen (1, 2) de restriction de course ou
d) déplacement dans une direction opposée à la première direction du premier élément de traitement (4a) dès qu'une opération de traitement exécutée par les deux moyens de traitement (4a, b) est terminée.

9. Procédé selon les revendications 7 ou 8, dans lequel au moins un entraînement (7, 10) est conduit à l'aide d'une régulation de couple exécutée par une commande (9).

10. Procédé selon les revendications 7, 8 ou 9, dans lequel au moins un entraînement (7, 10) comporte un détecteur de vitesse de rotation et/ou un détecteur d'angle et dans lequel les données délivrées par le détecteur sont traitées par la commande (9) pour déterminer la valeur effective de la position.

11. Procédé selon les revendications 7, 8 ou 9, dans lequel au moins un entraînement (7, 10) est réalisé sans détecteur et dans lequel la valeur effective de la position est déterminée en tenant compte du courant de fonctionnement et/ou de la tension de fonctionnement.
